# EUROPEAN PATENT APPLICATION

(11) **EP 4 375 596 A1**
(43) Date of publication of application: **29.05.2024**
(21) Application number: 22845157.1
(22) Date of filing: 07.07.2022
(51) Int. Cl.: F25D 11/02

(54) **REFRIGERATOR**

(30) Priority: 23.07.2021 CN 202110837817
(71) Applicant: Hefei Haier Refrigerator Co., Ltd, Hefei, Anhui 230601 (CN); Qingdao Haier Refrigerator Co., Ltd., Laoshan District Qingdao Shandong 266101 (CN); Haier Smart Home Co., Ltd., Qingdao, Shandong 266101 (CN)
(72) Inventor: WANG, Yi, Qingdao, Shandong 266101 (CN); ZHANG, Hao, Qingdao, Shandong 266101 (CN); LYU, Peng, Qingdao, Shandong 266101 (CN); ZHAO, Xiaojun, Qingdao, Shandong 266101 (CN)
(74) Representative: Winter, Brandl - Partnerschaft mbB
(86) International application number: PCT/CN2022/104414
(87) International publication number: WO 2023/000992

(57) **Abstract**

A refrigerator comprising a beverage preparation module, the beverage preparation module comprises a storage portion, an ice water portion, a carbonated water portion, and an output portion. The storage portion for placing ingredients to prepare beverages of different flavors; the ice water portion for providing ice water; the carbonated water portion for obtaining ice water from the ice water portion and preparing carbonated water based on the ice water; and the output portion connected to the ice water part and/or the carbonated water part, for controlling the flow of carbonated water or ice water through the storage portion to dispense beverages of different flavors. Since the storage portion of the beverage preparation module is used to provide ingredients of different flavors according to the specific needs of the user, the ice water portion and the carbonated water portion provide two types of water, and in conjunction with the control of the output portion, a combination of different flavors of beverages can be prepared, meeting the user's demand for different types of drinks. The method of preparing beverages provided by the refrigerator in the present embodiment is simple, offering a better user experience.

## Description

### TECHNICAL FIELD

The invention relates to the field of refrigeration appliance, and in particular relates to a refrigerator.

### BACKGROUND

With the users' pursuit of quality of life, there is a growing demand for various types of chilled beverages. Currently, users can only prepare cold drinks in a refrigerator or at room temperature. A better method is to pre-prepare cold drinks in the refrigerator, then add bubbles through a bubbler. This method is cumbersome, the user needs to require a separate bubbler, and needs to place it near the refrigerator for convenience, leading to a subpar experience. For preparation, the bubbler's bottle must be placed in the refrigerator in advance, but without dedicated space in the refrigerator, arbitrary placement resulting in a poor user experience.

### SUMMARY

An objective of the present invention is to provide a refrigerator that addresses at least some technical issues in preparing different types of cold beverages.

Another objective is to make the beverage preparation module compact and increase the stability of the beverage preparation module in high humidity environments.

A further objective is to facilitate easy beverage delivery.

Another objective is to prevent flavor mixing between different types of beverages.

Particularly, the present invention provedes a refrigerator comprising a beverage preparation module, wherein the beverage preparation module comprises:
a storage portion for placing ingredients to prepare beverages of different flavors;
an ice water portion for providing ice water;
a carbonated water portion for obtaining ice water from the ice water portion and preparing carbonated water based on the ice water; and
an output portion connected to the ice water part and/or the carbonated water part, for controlling the flow of carbonated water or ice water through the storage portion to dispense beverages of different flavors.

Optionally, the ice water portion comprises:
a water tank for storing ice water, the water tank is located above the output portion and the carbonated water portion to dispense ice water from the water tank under the influence of gravity to both the output portion and the carbonated water portion.

Optionally, the water tank is located directly above the output portion and the carbonated water portion, with the carbonated water portion and the output portion arranged side by side beneath the water tank, an output space is formed below the output portion.

Optionally, the storage portion is located below the output portion.

Optionally, the carbonated water portion comprises:
a carbon dioxide container for storing carbon dioxide; and
a mixing container for obtaining carbon dioxide and ice water respectively from the carbon dioxide container and the ice water portion to prepare carbonated water, and providing carbonated water to the output portion, wherein a pressure relief valve is provided at the top of the mixing container.

Optionally, the output portion is provided with an input pipe, one end of the input pipe extends into the bottom of the mixing container to supply carbonated water to the output portion under the pressure in the mixing container.

Optionally, the bottom of the water tank is provided with a pipeline connected to the mixing container, and the pipeline is provided with a switch; and
a float is provided in the mixing container, when the water level in the mixing container is not within the predetermined range, the float controls the switch to open or close to ensure the water level in the mixing container stays within a predefined range.

Optionally, the refrigerator further comprising:
a double-layered door, the beverage preparation module is provided within the space defined by an inner layer of the double-layered door, and the output space is exposed when an outer layer of the double-layered door is opened.

Optionally, the output portion is further provided with a selection switch for adjusting the flow of carbonated water or ice water through the ingredients according to a user's operation.

The refrigerator of the present invention comprising a beverage preparation module, the beverage preparation module comprises a storage portion, an ice water portion, a carbonated water portion, and an output portion. The storage portion for placing ingredients to prepare beverages of different flavors; the ice water portion for providing ice water; the carbonated water portion for obtaining ice water from the ice water portion and preparing carbonated water based on the ice water; and the output portion connected to the ice water part and/or the carbonated water part, for controlling the flow of carbonated water or ice water through the storage portion to dispense beverages of different flavors. Since the storage portion of the beverage preparation module is used to provide ingredients of different flavors according to the specific needs of the user, the ice water portion and the carbonated water portion provide two types of water, and in conjunction with the control of the output portion, a combination of different flavors of beverages can be prepared, meeting the user's demand for different types of drinks. The method of preparing beverages provided by the refrigerator in the present embodiment is simple, offering a better user experience.

Furtherly, the water tank of the present invention is located directly above the output portion and the carbonated water portion, with the carbonated water portion and the output portion arranged side by side beneath the water tank, an output space is formed below the output portion. This setup makes the structure of the beverage preparation module compact, reducing its volume and saving space in the refrigerator.

Furtherly, the water tank of the present invention is located above the output portion and the carbonated water portion to dispense ice water from the water tank under the influence of gravity to both the output portion and the carbonated water portion, dispensing ice water without external power. No electromotive equipment is set up, avoiding damage to the electromotive equipment in a high humidity environment and increasing the stability of the beverage preparation module in a high humidity environment.

Furtherly, the storage portion is located below the output portion, facilitating operation and preventing flavor mixing.

According to the following detailed description of specific embodiments of the present invention in conjunction with the accompanying drawings, the above and other objects, advantages and features of the present invention will be better understood by those skilled in the art.

### BRIEF DESCRIPTION OF THE DRAWINGS

The drawings are described in detail in a non-limiting, exemplary manner. The same reference numerals in the drawings denote the same or similar parts. Technical professionals in this field should understand that these drawings are not necessarily drawn to scale. The drawings comprise:
Fig. 1 is a schematic of a refrigerator according to one embodiment of the present invention.
Fig. 2 is a principle schematic of a beverage preparation module according to one embodiment of the present invention.
Fig. 3 is a schematic of a beverage preparation module according to one embodiment of the present invention.
Fig. 4 is a schematic of an output portion and a storage portion of a beverage preparation module according to one embodiment of the present invention.

### DETAILED DESCRIPTION

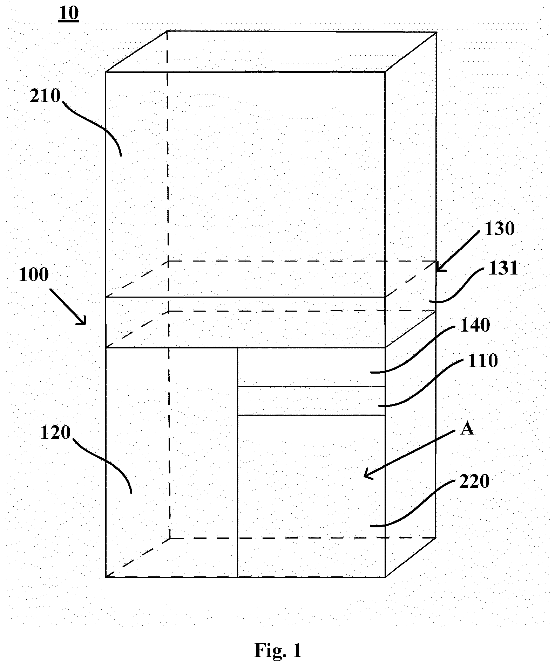

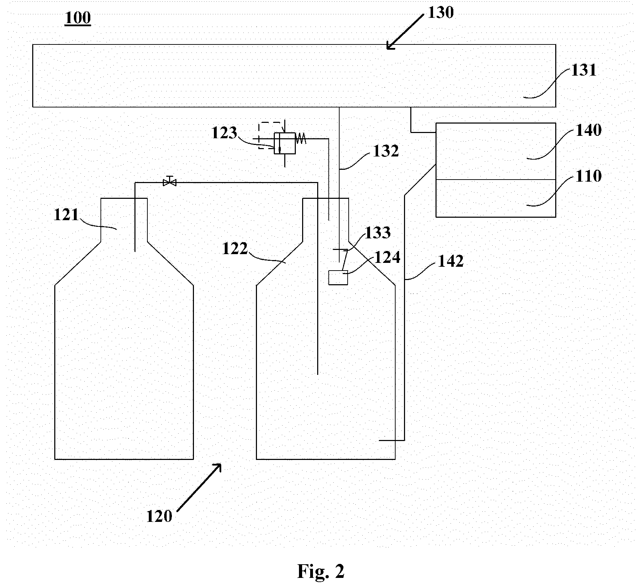

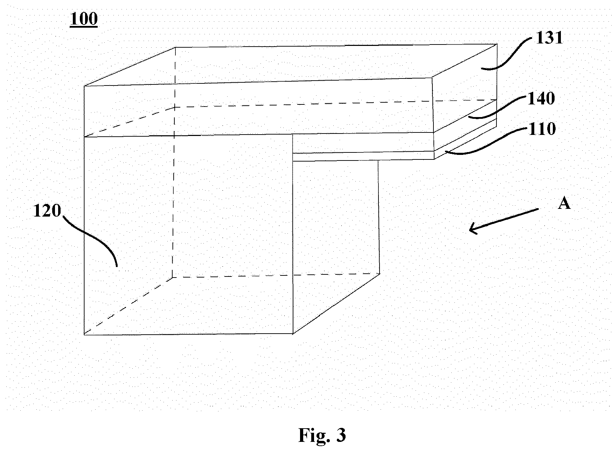

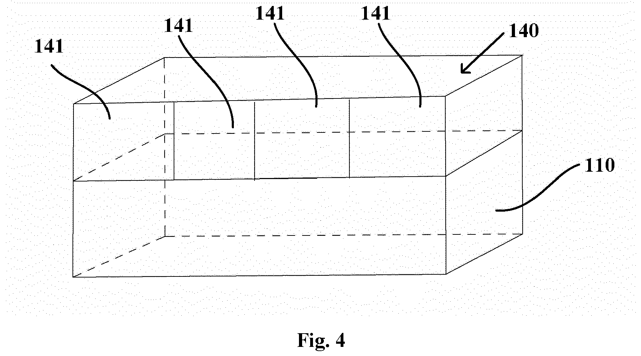

Fig. 1 is a schematic of a refrigerator 10 according to one embodiment of the present invention. Fig. 2 is a principle schematic of a beverage preparation module 100 according to one embodiment of the present invention. Fig. 3 is a schematic of the beverage preparation module 100 according to one embodiment of the present invention. Fig. 4 is a schematic of the output portion 140 and the storage portion 110 of the beverage preparation module 100 according to one embodiment of the present invention.

As shown in Figure 1, the refrigerator 10 provided in the present embodiment comprises a beverage preparation module 100, comprising a storage portion 110, an ice water portion 130, a carbonated water portion 120, and an output portion 140. The specific manner of setting up the beverage preparation module 100 in the refrigerator 10 is not limited. For instance, the beverage preparation module 100 can be accommodated within the cabinet of the refrigerator 10, installed in a basket at the door of the refrigerator 10, or set on a special bracket at the door of the refrigerator 10. The refrigerator 10 has refrigeration function, the beverage preparation module 100 can provide users with cold drinks of different flavors.

The storage portion 110 is for placing ingredients to prepare beverages of different flavors. The shape and type of the storage portion 110 are not specifically limited, for example, it can be a sliding drawer or a drawer with a flip cover. The drawer may have one or more channels, with shapes like funnels, trapezoids, etc., storing different ingredients in different channels. The shape of the storage portion 110 can be square, trapezoidal, or funnel-shaped. The flavors of the ingredients are not specifically limited and can comprise coffee, milk, or various concentrated vegetable and fruit juices. The method of placing the ingredients is not specifically limited; it can be prepared one time for one use, or multiple times for one use. The form of the ingredients is also not specifically limited, for example, they can be in block, powder, or capsule form. Optionally, if the ingredient form is a capsule, the beverage preparation module 100 is provided with a needle to puncture the capsule, aiding in its dissolution. The installation location and structure of the needle are not specifically limited. For example, it can be installed on the flip cover of the storage portion 110, puncturing the capsule when the flip cover is closed during beverage preparation. Alternatively, the needle can be installed on the output pipe of the output portion 140, puncturing the capsule under the action of a press switch during beverage preparation; this is not specifically limited here. The storage portion 110 is used to provide ingredients of different flavors according to the specific needs of the user.

The ice water portion 130 is for providing ice water. The type of the ice water portion 130 is not specifically limited, for example, the ice water portion 130 can comprise a delivery pipe connected to a water pipe and an ice cube storage, the delivery pipe can output ice cubes and water in a certain set proportion.

The carbonated water portion 120 is for obtaining ice water from the ice water portion 130 and preparing carbonated water based on the ice water. The type of the carbonated water portion 120 is not specifically limited. The carbonated water making portion is used for mixing carbon dioxide and ice water to prepare carbonated water.

The output portion 140 is connected to the ice water portion 130 and/or the carbonated water portion 120 for controlling the flow of carbonated water or ice water through the storage portion 110 to dispense beverages of different flavors. The specific type of the output portion 140 is not limited, for example, the output portion 140 can comprise two containers that connected to the ice water portion 130 and the carbonated water portion 120 for storing ice water and carbonated water, respectively. The bottom of each container provides at least one output opening, with a sliding or pressing switch set at the output opening.The output opening is connected to the storage portion 110, or the output opening is connected to a different channel in the storage portion 110, obtaining beverages of different flavors through the press switch. Alternatively, the ice water portion 130 and the carbonated water portion 120 are connected to the output portion 140 through a pipe with multiple channels or multiple pipes, multiple pipes connected to different channels respectively, or multiple pipes connected to a single channel. The output portion 140 provides a switch, pressing different switches to prepare beverages of different flavors.

Thus, it is evident that the storage portion 110 of the beverage preparation module 100 provides ingredients of different flavors according to the specific needs of the user. The ice water portion 130 and the carbonated water portion 120 provide two types of water, and in conjunction with the control of the output portion 140, a combination of different flavors of beverages can be prepared, meeting the user's demand for different types of drinks. The method of preparing beverages provided by the refrigerator 10 in the present embodiment is simple, offering a better user experience.

As shown in Figures 1 to 4, the ice water portion 130 comprises a water tank 131. The water tank 131 is for storing ice water and is located above the output portion 140 and the carbonated water portion 120 to dispense ice water from the water tank 131 under the influence of gravity to both the output portion 140 and the carbonated water portion 120. The shape of the water tank 131 is not specifically limited, and it can be designed in different shapes according to specific needs, for instance, to make reasonable use of space, the water tank 131 can be designed in different shapes according to the shape of the installation space. In this embodiment, the water tank 131 is rectangular. The refrigerator 10 has a refrigeration function, and the water stored in the water tank 131 can be directly cooled to form ice water, without further processing, making the structure of the beverage preparation module 100 compact. The water tank 131 is located above the output portion 140 and the carbonated water portion 120 to dispense ice water from the water tank 131 under the influence of gravity to both the output portion 140 and the carbonated water portion 120, dispensing ice water without external power, thus saving energy and simplifying the structure of the beverage preparation module 100. No electromotive equipment is set up, avoiding damage to the electromotive equipment in a high humidity environment and increasing the stability of the beverage preparation module 100 in a high humidity environment.

The water tank 131 is located directly above the output portion 140 and the carbonated water portion 120, with the carbonated water portion 120 and the output portion 140 arranged side by side beneath the water tank 131, as shown in Figures 1 to 4. The carbonated water portion 120 and the output portion 140 are located on both sides of the water tank 131, i.e., the carbonated water portion 120 is on the left side of the water tank 131 in the figure, and the output portion 140 is on the right side of the water tank 131 in the figure (left and right here are for descriptive convenience and do not indicate the actual position in the structure); an output space A is formed below the output portion 140. This setup makes the structure of the beverage preparation module 100 compact, reducing its volume and saving space in the refrigerator 10. At the same time, this setup simplifies the connection method of the beverage preparation module 100. For example, different output openings can be directly set at the bottom of the right side of the water tank 131, with the switches of the output portion 140 directly set at the output openings for control. An output pipe can be directly set at the bottom of the left side of the water tank 131 to dispense ice water to the carbonated water portion 120.

In some embodiments, as shown in Figures 1 to 4, the storage portion 110 is located below the output portion 140, facilitating operation and preventing flavor mixing. Optionally, the storage portion 110 can be detachably set on the output portion 140 for easy removal and cleaning.

In some embodiments, as shown in Figures 1 to 4, the carbonated water portion 120 comprises a carbon dioxide container 121 and a mixing container 122. The types and shapes of the carbon dioxide container 121 and the mixing container 122 are not specifically limited and can be changed according to the needs of the freezing space or the shape of the water tank 131. The carbon dioxide container 121 is for storing carbon dioxide, and the specific form of carbon dioxide is not limited; it can be a high-pressure gas. The mixing container 122 obtains carbon dioxide and ice water respectively from the carbon dioxide container 121 and the ice water portion 130 to prepare carbonated water, providing carbonated water to the output portion 140; a pressure relief valve 123 is set at the top of the mixing container 122. The pressure relief valve 123 ensures that the pressure inside the mixing container 122 is kept within a set range and also ensures the safety of the system.

In some embodiments, as shown in Figures 1 to 4, the output portion 140 is equipped with an input pipe 142, one end of which extends into the bottom of the mixing container 122 to supply carbonated water to the output portion 140 under the pressure in the mixing container 122. The end of the input pipe 142 extends into the bottom of the mixing container 122 to ensure there is enough pressure to supply carbonated water to the output portion 140. This setup saves energy and simplifies the structure of the beverage preparation module 100, avoiding the need for electromotive equipment and preventing damage to such equipment in a high humidity environment, thus increasing the stability of the beverage preparation module 100 in a high humidity environment.

In some embodiments, as shown in Figure 2, the bottom of the water tank 131 is provided with a pipeline 132 connected to the mixing container 122, and the pipeline 132 is provided with a switch 133; a float 124 is provided in the mixing container 122. When the water level in the mixing container 122 is not within the predetermined range, the float 124 controls the switch 133 to open or close, ensuring that the water level in the mixing container 122 stays within the predetermined range. The type of switch 133 is not specifically limited, for example, it can be a cover plate, hinged to the side wall of the pipeline 132, covering the hollow portion of the pipeline 132. When the water level is below the set range, the float 124 sinks, the cover plate moves away from the hollow portion of the pipeline 132, and ice water is delivered to the mixing container 122 under the influence of gravity, increasing the water level in the mixing container 122 to within the predetermined range. When the water level reaches the upper limit of the set range, the float 124 rises, applying upward pressure on the cover plate, moving it to a position that can block the flow path of the pipeline 132, preventing the delivery of ice water, and stabilizing the water level in the mixing container 122 within the predetermined range. Thus, it can be seen that the water tank 131 is set above the mixing container 122, the pipeline 132 is provided with switch 133, and the float 124 is provided in the mixing container 122. This mutually cooperative setup can automatically adjust the water level in the mixing container 122 without adding external power equipment and electrical control equipment, saving energy, simplifying the structure, avoiding damage to electrical control equipment in a high humidity environment, and increasing the stability of the beverage preparation module 100 in a high humidity environment.

In some embodiments, as shown in Figures 1 to 4, the refrigerator 10 further comprises a double-layered door, the beverage preparation module 100 is provided within the space defined by an inner layer of the double-layered door, and the output space is exposed when an outer layer of the double-layered door is opened. This setup of the beverage preparation module 100 facilitates the user's operation in preparing beverages of different flavors.

In some embodiments, the output portion 140 is further provided with a selection switch 141, used to adjust the flow of carbonated water or ice water through the ingredients according to a user's operation. The specific operation mode, type, and shape of the selection switch 141 are not specifically limited, for example, it can be operated by pressing, sliding, or rotating to open the selection switch 141. The method of adjusting the flow of carbonated water or ice water through the ingredients by the selection switch 141 is not specifically limited and can be specifically chosen according to the type of output portion 140 and the connection method between the output portion 140 and the carbonated water portion 120 and the ice water portion 130. For example, the output portion 140 can comprise two containers, each connected to the ice water portion 130 and the carbonated water portion 120, respectively storing ice water and carbonated water, and each having at least one output opening at the bottom. In this case, the selection switch 141 can be operated by pressing, sliding, or rotating, for instance, the switch could be a flap adapted to the output opening, set in a hole adapted to the output opening, pressing the flap to align or misalign the hole with the output opening, thus controlling the output.

It should be recognized by those skilled in the art that, although this document has extensively shown and described several exemplary embodiments of the invention, many other variations or modifications that are consistent with the principles of this invention can be directly determined or deduced from the content disclosed herein, without departing from the spirit and scope of the invention. Therefore, the scope of the invention should be understood and interpreted to cover all such other variations or modifications.

## Claims

1. A refrigerator comprising a beverage preparation module, wherein the beverage preparation module comprises:
a storage portion for placing ingredients to prepare beverages of different flavors;
an ice water portion for providing ice water;
a carbonated water portion for obtaining ice water from the ice water portion and preparing carbonated water based on the ice water; and
an output portion connected to the ice water part and/or the carbonated water part, for controlling the flow of carbonated water or ice water through the storage portion to dispense beverages of different flavors.

2. The refrigerator according to claim 1, wherein the ice water portion comprises:
a water tank for storing ice water, the water tank is located above the output portion and the carbonated water portion to dispense ice water from the water tank under the influence of gravity to both the output portion and the carbonated water portion.

3. The refrigerator according to claim 2, wherein:
the water tank is located directly above the output portion and the carbonated water portion, with the carbonated water portion and the output portion arranged side by side beneath the water tank, an output space is formed below the output portion.

4. The refrigerator according to claim 3, wherein:
the storage portion is located below the output portion.

5. The refrigerator according to any one of claims 2 to 4, wherein the carbonated water portion comprises:
a carbon dioxide container for storing carbon dioxide; and
a mixing container for obtaining carbon dioxide and ice water respectively from the carbon dioxide container and the ice water portion to prepare carbonated water, and providing carbonated water to the output portion, wherein a pressure relief valve is provided at the top of the mixing container.

6. The refrigerator according to claim 5, wherein:
the output portion is provided with an input pipe, one end of the input pipe extends into the bottom of the mixing container to supply carbonated water to the output portion under the pressure in the mixing container.

7. The refrigerator according to claim 5, wherein:
the bottom of the water tank is provided with a pipeline connected to the mixing container, and the pipeline is provided with a switch; and
a float is provided in the mixing container, when the water level in the mixing container is not within the predetermined range, the float controls the switch to open or close to ensure the water level in the mixing container stays within a predefined range.

8. The refrigerator according to claim 3 or 4, further comprising:
a double-layered door, the beverage preparation module is provided within the space defined by an inner layer of the double-layered door, and the output space is exposed when an outer layer of the double-layered door is opened.

9. The refrigerator according to any one of claims 1 to 4, wherein:
the output portion is further provided with a selection switch for adjusting the flow of carbonated water or ice water through the ingredients according to a user's operation.
